Europäisches Patentamt

European Patent Office

Office européen des brevets

(11) Publication number: **0 113 645**
**B1**

(12) **EUROPEAN PATENT SPECIFICATION**

(45) Date of publication of patent specification: **08.07.87**

(21) Application number: **83830225.5**

(22) Date of filing: **15.11.83**

(51) Int. Cl.⁴: **B 60 N 1/06,** A 47 C 7/38

(54) Headrest for motor vehicle seats.

(30) Priority: **09.12.82 IT 5404282 u**

(43) Date of publication of application:
**18.07.84 Bulletin 84/29**

(45) Publication of the grant of the patent:
**08.07.87 Bulletin 87/28**

(84) Designated Contracting States:
**CH DE FR GB IT LI NL SE**

(56) References cited:
**FR-A-1 339 672**
**FR-A-1 579 537**
**FR-A-2 154 994**
**GB-A-1 378 581**
**GB-A-2 037 154**

(73) Proprietor: **FIAT AUTO S.p.A.**
**Corso Giovanni Agnelli 200**
**I-10135 Torino (IT)**

(72) Inventor: **Edel, Bruno**
**Piazza Cavour 3**
**I-10123 Torino (IT)**

(74) Representative: **Buzzi, Franco et al**
**c/o Jacobacci-Casetta & Perani S.p.A. Via Alfieri,**
**17**
**I-10121 Torino (IT)**

Courier Press, Leamington Spa, England.

## Description

The present invention relates to headrests for motor vehicle seats, of the type comprising a support structure intended to be fitted to the top of the backrest of a seat and a soft cushion carried by the support structure.

More particularly, the invention refers to a headrest in which the cushion is connected to the support structure so as to be able to assume; in use, a lowered position in which one of its ends rests upon the upper zone of the surface of the backrest against which the back of the user bears, starting from an erect position in which it is disposed above the backrest.

A headrest of the above mentioned type is known from GB—A—2 037 154.

The headrest according to the invention is characterised in that the cushion is articulated at its upper end to the support structure so as to be able to pivot between a retracted position and a position in which it projects out from the support structure, in that means are provided for varying the vertical position of the cushion relative to the backrest of the seat in use, and in that the cushion has a substantially T-shape the head of which is defined by the end of the cushion itself arranged to bear, in the lowered position, against the backrest of the seat.

By virtue of this solution, the headrest according to the invention is more practical and comfortable in use, since, in addition to its normal protective function typical of headrests, it is also able to fulfil a new and original function of supporting the head of the user in a particularly comfortable condition of relaxation and rest.

Moreover, the T-shape of the cushion allows a further improvement in the degree of comfort of the head rest during its use with the cushion in its lowered position of relaxation.

Further characteristics and advantages of the invention will become clear in the course of the detailed description which follows, with reference to the appended drawings, provided purely by way of non-limiting example, in which:

Figure 1 is a schematic perspective view of a headrest for motor vehicle seats according to the invention, illustrated in a first condition of use;

Figure 2 is a view similar to Figure 1 with the headrest in a second condition of use,

Figure 3 is a perspective view of a detail of the headrest illustrated in Figures 1 and 2,

Figure 4 is a schematic view in partial transverse section of a first variant of the headrest according to the invention, and

Figure 5 is a view similar to Figure 4 illustrating a second variant of the headrest.

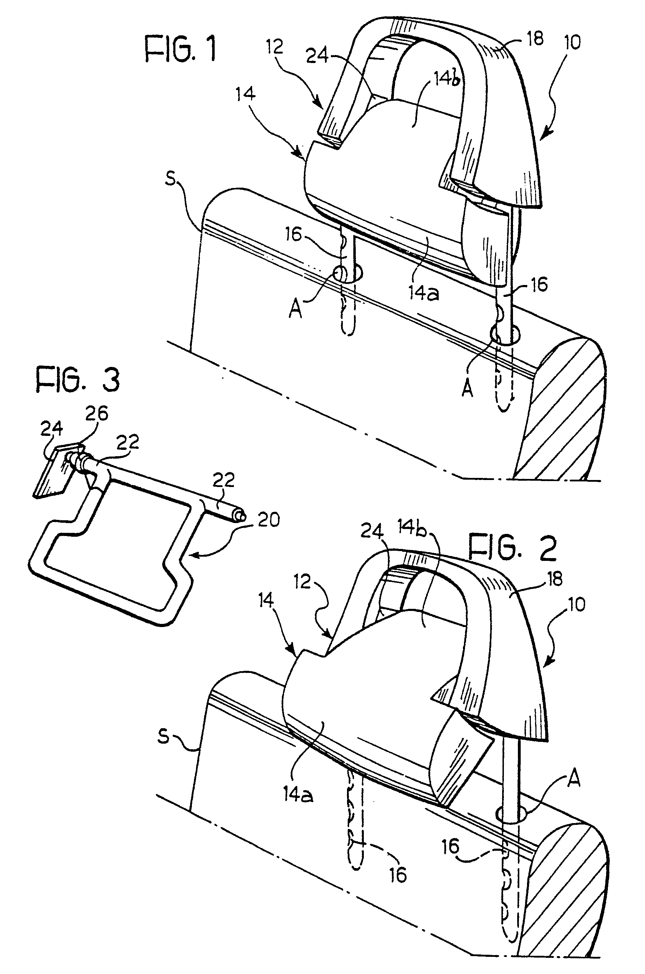

Referring initially to Figures 1 to 3, a headrest is generally indicated 10 and is attached to the top of the backrest S of a motor vehicle seat.

The headrest 10 includes a support structure 12 and a cushion 14 articulated to the support structure 12. The support structure 12 has a generally inverted U-shape defined by a pair of rods 16 inserted in known manner in respective holes A formed in the upper end of the backrest S so as to be vertically adjustable therein, and a yoke 18 covered with a soft material, for example an expanded synthetic material.

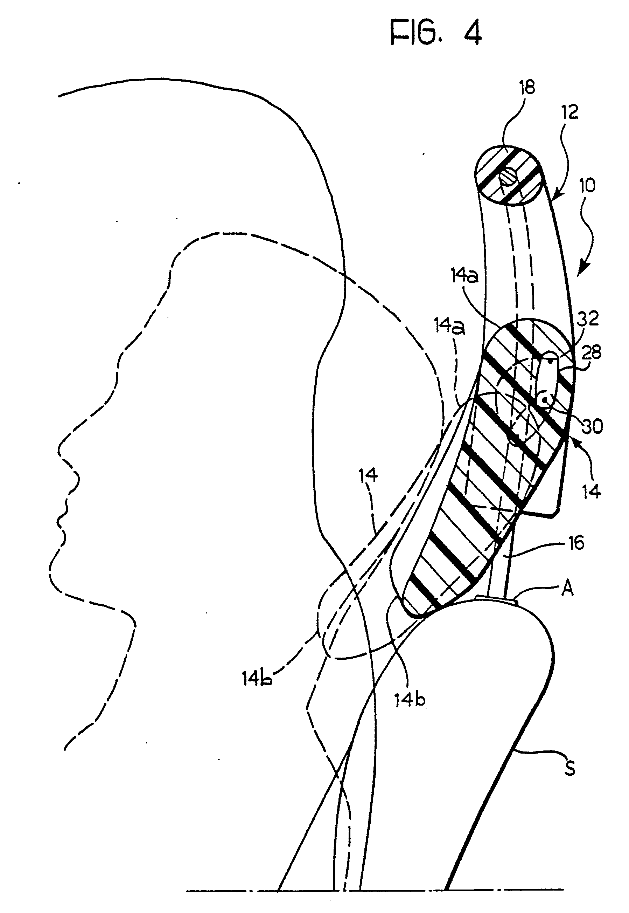

The cushion 14 includes a metal reinforcing frame 20 illustrated in detail in Figure 3 incorporated in a body of soft material having a generally inverted T-shape with rounded edges. In effect the lower part of the cushion 14 indicated 14a has a width greater than that of the supporting structure 12 while the upper part 14b is inserted within the yoke 18. From the sides of the upper part 14b there project two lateral pins 22 (Figure 3) which form part of the reinforcing frame 20 and rotatably engage respective plates 24 carried by the structure 12 beneath the yoke 18. Thus the cushion 14 is able to pivot relative to the support structure 12 between the retracted position of Figure 1 in which the lower part 14a rests against the rods 16 and a projecting position illustrated in Figure 2 in which this part 14a is spaced from the rods 16. At least one hairpin spring 26 wound on one of the pins 22 with one end anchored to the frame 20 and the other end anchored to the corresponding plate 24 tends to retain the cushion 14 in the retracted position of Figure 1.

In the position of Figure 1, the headrest fulfils its normal function of protecting the head and the neck of the user during movement of the vehicle. The position illustrated in Figure 2 corresponds, however, to the use of the headrest 10 for functions of rest and relaxation for the head of the user. In order to place the headrest 10 in this position, it suffices to press the support structure 12 downwardly, pushing the rods 16 into the respective holes A in the backrest S. Due to this lowering, the lower side of the cushion 14 is brought into contact with the top of the backrest S whereby the cushion itself rotates towards the position of Figure 2, being kept in contact with the upper zone of the surface of the backrest S against which the back of the user bears. In this position the cushion 14 thus provides a convenient and comfortable rest for the head of the user.

In order to return the cushion 14 to the retracted position of Figure 1 it suffices to raise the support structure 12 up again until the part 14a disengages from the top of the backrest S, allowing the return spring or springs 26 to bring the part 14a back against the rods 16.

Clearly the position and hence the angle of the cushion 13 in the projecting position of Figure 2 may be regulated in dependence on the requirements of the user simply by means of a vertical movement of the support structure 12.

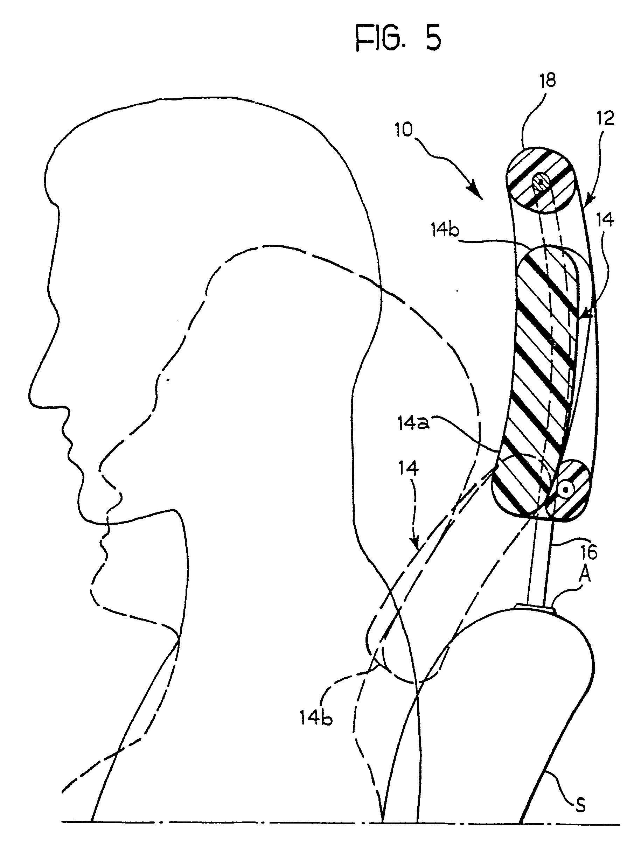

The variants of the headrest illustrated in Figures 4 and 5 are generally similar to the embodiment described above, and only the differences will be described in detail, with the use of the same reference numerals for identical or similar parts.

In the variant of Figure 4, the pins 22 for articulating the cushion 14 to the support structure 12 are replaced by a pair of lateral link rods one of which is indicated 28 each of which has one end articulated at 30 to a respective plate 24 and the other end articulated at 32 to the side of the upper part 14b of the cushion 14. The operation of the headrest according to this variant is similar to that described previously and two different possible positions of the cushion 14 are indicated in continuous and in broken outline respectively in Figure 4.

In the case of Figure 5, the cushion 14 is instead articulated to the support structure 12 by means of its lower part 14a. In this case the movement from the normal position of use to the position of relaxation of the headrest is achieved simply by overturning of the cushion 14 from the raised position illustrated in continuous outline to the lowered position illustrated in broken outline in Figure 5. Clearly in the lowered position, it is the part 14b of the cushion 14 which rests on the upper surface of the backrest S against which the back of the user bears, in which respect it differs from the embodiments described previously. It is again possible to adjust the inclination of the cushion 14 in the lowered position of relaxation, in this case by simply varying the vertical position of the support structure 12 relative to the backrest S.

**Claims**

1. Headrest for motor vehicle seats, of the type comprising a support structure for attachment to the top of the backrest of a seat and a cushion carried by the support structure, the cushion (14) being connected to the support structure (12) so as to be able to assume, in use, a lowered position in which one of its ends (14a, 14b) rests upon the upper zone of the surface of the backrest (S) against which the back of the user bears, starting from an erect position in which it is disposed above the backrest (S), characterised in that the cushion is articulated at its upper end (14b) to the support structure (12) so as to be able to pivot between a retracted position and a position in which it projects out from the support structure (12), in that means are provided for varying the vertical position of the cushion (14) relative to the backrest (S) of the seat in use, and in that the cushion has a substantially T-shape the head of which is defined by the end (14a) of the cushion itself (14) arranged to bear, in the lowered position, against the backrest (S) of the seat.

2. Headrest according to Claim 1, characterised in that there are further provided resilient means (26) resisting the pivoting movement of the cushion (14) from the retracted position to the projecting position.

3. Headrest according to Claim 1 or Claim 2, characterised in that the articulation of the cushion (14) to the support structure (12) is effected by means of a pair of lateral pins (22) carried by a reinforcing core (20) incorporated in the cushion (14).

4. Headrest according to Claim 1 or Claim 2, characterised in that the articulation of the cushion (14) of the support structure (12) is achieved by means of a pair of lateral link rods (28) each having one end articulated to the cushion (14) and the other end articulated to the support structure (12).

5. Headrest according to any one of Claims 1 to 4, characterised in that the means for varying the vertical position of the cushion (14) relative to the backrest (S) of the seat include a pair of rods (16) forming part of the support structure (12) and arranged in known manner for insertion in corresponding receiving members known per se in the top of the backrest (S) so as to be adjustable in height.

6. Headrest according to Claim 1, characterised in that the cushion (14) is articulated at its lower end (14a) to the support structure (12) so as to be able to overturn between the said erect position, which is the normal position of use, and the said lowered position, which is for relaxation.

7. Headrest according to any one of the preceding claims, characterised in that the support structure (12) has a generally inverted U-shape with the upper part (18) covered with soft material.

**Patentansprüche**

1. Kopfstütze für Kraftfahrzeugsitze
mit einer an der Oberseite der Rückenlehne (S) eines Sitzes anbringbaren Tragkonstruktion (12) und einem an dieser Tragkonstruktion gehalterten Kissen (14), das mit der Tragkonstruktion derart verbunden ist, daß es sich, ausgehend von einer aufgerichteten Position, in der es sich oberhalb der Rückenlehne (S) befindet, in eine abgesenkte Gebrauchsposition überführen läßt, in der es mit einem seiner Enden (14a, 14b) im oberen Bereich der Rückenlehne auf dessen Oberfläche aufliegt, gegen die sich der Benutzer mit seinem Rücken abstützt, dadurch gekennzeichnet, daß das Kissen mit seinem oberen Ende (14b) derart an der Tragkonstruktion (12) angelenkt ist, daß es zwischen einer zurückgesetzten Position und einer Position verschwenkbar ist, in der es aus der Tragkonstruktion (12) hervorsteht, daß Mittel vorgesehen sind, mit deren Hilfe sich die vertikale Position des Kissens (14) relativ zu der Rückenlehne (S) des Sitzes bei der Benutzung verändern läßt, und daß das Kissen im wesentlichen die Form eines "T" hat, dessen Kopf von demjenigen Ende (14a) des Kissens (14) gebildet ist, das in der genannten abgesenkten Position auf der Rückenlehne (S) des Sitzes aufliegt.

2. Kopfstütze nach Anspruch 1, dadurch gekennzeichnet, daß ferner federnde Mittel (26) vorgesehen sind, die der Verschwenkung des Kissens (14) aus der zurückgetzten Position in die vorstehende Position Widerstand entgegensetzen.

3. Kopfstütze nach Anspruch 1 oder 2, dadurch gekennzeichnet, daß die Anlenkung des Kissens (14) an der Tragkontruktion (12) durch zwei seitliche Stifte (22) erfolgt, die von einem in das Kissen (14) eingesetzten Verstärkungskern (20) getragen sind.

4. Kopfstütze nach Anspruch 1 oder 2, dadurch gekennzeichnet, daß die Anlenkung des Kissens (14) an der Tragkontruktion (12) durch zwei seitliche Verbindungsstäbe (28) erfolgt, die jeweils mit einem Ende mit dem Kissen (14) und mit dem anderen Ende mit der Tragkontruktion (12) gelenkig verbunden sind.

5. Kopfstütze nach einem der Ansprüche 1 bis 4, dadurch gekennzeichnet, daß die Mittel zur Veränderung der vertikalen Position des Kissens (14) relativ zu der Rückenlehne (S) des Sitzes (S) zwei Stäbe (16) umfassen, die Bestandteil der Tragkontruktion (12) bilden und zum Zweck der Höhenverstellung in an sich bekannter Weise in entsprechende in dem oberen Teil der Rückenlehne (S) angeordnete Aufnahmeteile ausgebildet sind.

6. Kopfstütze nach Anspruch 1, dadurch gekennzeichnet, daß das Kissen (14) mit seinem unteren Ende (14a) in der Weise gelenkig mit der Tragkontruktion (12) verbunden ist, daß es zwischen der genannten aufgerichteten Position, die die normale Gebrauchsposition bildet, und der genannten abgesenkten Position, die eine Ruhe- und Enspannungsposition bildet, verschwenbar ist.

7. Kopfstütze nach einem der vorhergehenden Ansprüche, dadurch gekennzeichnet, daß die Tragkontruktion (12) im wesentlichen die Form eines umgekehrten "U" hat, dessen oberer Teil mit einem weichen Material verkleidet ist.

**Revendications**

1. Appuie-tête pour sièges de véhicules automobiles, du type comprenant une structure support destinée à se fixer au sommet du dossier d'un siège, et un coussin porté par la structure support, le coussin (14) étant relié à la structure support (12) de manière à pouvoir prendre, en utilisation, une position abaissée dans laquelle l'une de ses extrémités (14a, 14b) repose sur la zone supérieure de la surface du dossier (S) contre lequel porte le dos de l'utilisateur, en partant d'une position redressée dans laquelle il est disposé au-dessus du dossier (S), caractérisé en ce que le coussin est articulé sur la structure support (12) à son extrémité supérieure (14b) de manière à pouvoir pivoter entre une position rétractée et une position dans laquelle il fait saillie en dehors de la structure support (12), en ce que des moyens sont prévus pour faire varier la position en hauteur du coussin (14) par rapport au dossier (S) du siège en utilisation, et en ce que le coussin possède une forme sensiblement en T dont la tête est définie par l'extrémité (14a) du coussin (14) agencée pour porter contre le dossier (S) du siège dans la position abaissée.

2. Appuie-tête selon la revendication 1, caractérisé en ce qu'il y est prévu en outre des moyens élastiques (26) qui résistent au mouvement de pivotement du coussin (14) de la position rétractée à la position en saillie.

3. Appuie-tête selon la revendication 1 ou la revendication 2, caractérisé en ce que l'articulation du coussin (14) sur la structure support (12) est réalisée à l'aide d'une paire de tourillons latéraux (22) portés par une armature de renforcement (20) incorporée dans le coussin (14).

4. Appuie-tête selon la revendication 1 ou la revendication 2, caractérisé en ce que l'articulation du coussin (14) de la structure support (12) est réalisée au moyen d'une paire de biellettes latérales (28) qui ont chacune une extrémité articulée sur le coussin (14) et l'autre extrémité articulée sur la structure support (12).

5. Appuie-tête selon l'une quelconque des revendications 1 à 4, caractérisé en ce que les moyens permettant de faire varier la position en hauteur du coussin (14) par rapport au dossier (S) du siège comprennent une paire de tiges (16) qui font partie de la structure support (12) et qui sont agencées d'une façon connue pour se loger dans des éléments récepteurs correspondants, connus en soi, prévus dans le sommet du dossier (S) de façon à être réglables en hauteur.

6. Appuie-tête selon la revendication 1, caractérisé en ce que le coussin (14) est articulé à son extrémité inférieure (14a) sur la structure support (12) de manière à pouvoir basculer entre ladite position redressée, qui est la position normale d'utilisation, et ladite position abaissée, qui est destinée au délassement.

7. Appuie-tête selon l'un quelconque des revendications précédentes, caractérisé en ce que la structure support (12) possède la forme générale d'un U reversé, avec sa partie supérieure (18) recouverte d'une matière souple.

0 113 645

FIG. 1

FIG. 3

FIG. 2

0 113 645

FIG. 4

# FIG. 5